Europäisches Patentamt

(19) European Patent Office

Office européen des brevets

(11) **EP 0 924 531 B1**

(12) **FASCICULE DE BREVET EUROPEEN**

(45) Date de publication et mention
de la délivrance du brevet:
**03.11.2004 Bulletin 2004/45**

(51) Int Cl.⁷: **G01S 1/04**

(21) Numéro de dépôt: **98402345.7**

(22) Date de dépôt: **24.09.1998**

(54) **Procédé de traitement de signaux d'un système de positionnement par satellite**

Signalverarbeitungsverfahren eines Satelliten-Positionsmess-Systems

Signal processing method of a positioning system using satellites

(84) Etats contractants désignés:
**DE ES GB IT SE**

(30) Priorité: **19.12.1997 FR 9716124**

(43) Date de publication de la demande:
**23.06.1999 Bulletin 1999/25**

(73) Titulaire: **AGENCE SPATIALE EUROPEENNE**
**F-75738 Paris Cedex 15 (FR)**

(72) Inventeurs:
• **Silvestrin, Pierluigi**
**2343 RX Oegstgeest (NL)**
• **Cooper, John**
**Headingley, Leeds LS6 2AX (GB)**

(74) Mandataire: **Jacquard, Philippe Jean-Luc et al**
**Cabinet ORES,**
**36, rue de St Pétersbourg**
**75008 Paris (FR)**

(56) Documents cités:
**WO-A-96/27139**          **US-A- 5 134 407**

**Description**

La présente invention a pour objet un procédé de traitement de signaux de positionnement selon un système de positionnement par satellite tel que le système GPS, qui permette de tirer parti des signaux radiofréquence $L_1$ et $L_2$ sans toutefois connaître le code de sécurité ("code Y") utilisé pour l'encryptage.

Le système de positionnement "NAVSTAR Global Positioning System" ou GPS a été mis en place par le Gouvernement des Etats-Unis et il met en oeuvre 24 satellites qui transmettent des signaux $L_1$ et $L_2$ à deux fréquences différentes. Ces signaux de fréquence centrale respectivement $f_1$ = 1575,42 MHz et $f_2$ = 1227,6 MHz sont générés par une horloge atomique embarquée, de fréquence 10,23 MHz.

Si on veut compenser les effets dus à la propagation dans le milieu dispersif qu'est l'ionosphère, il est fondamental de disposer à la fois des signaux $L_1$ et $L_2$, et ceci est donc essentiel dans toutes les applications qui requièrent une précision élevée.

Le signal $L_1$ est modulé en quadrature de phase par deux codes pseudo-aléatoires, à savoir le code C/A ("clear/acquisition") à une cadence de 1,023 Mhz et un second code de fréquence plus élevée à une cadence de 10,23 Mhz. Le signal $L_2$ n'est modulé qu'avec le second code qui est identique à celui utilisé pour le signal $L_1$. Le code C/A est public, mais le second code est exploité selon deux modes à la discrétion de l'opérateur, à savoir

- soit sous la forme d'un code public, dénommé le code P,
- soit sous la forme d'un code de sécurité secret, ou difficilement accessible, dénommé le code Y.

Le mode nominal de fonctionnement du système GPS met en oeuvre le code Y. La raison en est que les opérateurs GPS veulent éviter que la détection soit perturbée par des signaux leurre qui pourraient en particulier être diffusés au cours d'opérations militaires.

En d'autres termes, et contrairement à certaines affirmations, le but du code Y n'est pas de dégrader les performances du système GPS pour les utilisations non agrées, mais d'assurer les performances du système aux utilisateurs militaires agrées.

En outre, le fait d'avoir accès au code Y implique de toutes façons un recodage à effectuer chaque année, ce qui est peu pratique en particulier dans le cadre des applications spatiales.

Dans le but de permettre à des applications civiles d'être mises en oeuvre sans utiliser le code Y, des sociétés et des instituts de recherche ont mis au point des procédés de suivi sans code qui permettent de retrouver le code $L_2$ et l'information de phase de la porteuse avec une bonne précision. Cette situation de fait a été reconnue par le Gouvernement des Etats-Unis qui a récemment déclaré que le signal $L_2$ pourrait être utilisé dans des applications civiles, seulement pour effectuer des mesures précises de phase de la porteuse. En d'autres termes, la modulation du signal restera pour le GPS compatible avec un procédé de suivi sans code.

Les procédés de suivi sans code sont particulièrement intéressants dans le cadre d'applications scientifiques telles que la géodésie, la détermination des mouvements de la croûte terrestre, et la météorologie, ainsi que pour la détermination de la valeur intégrée de la teneur en vapeur d'eau de la troposphère, et sont actuellement d'usage courant dans les récepteurs de précision disponibles sur le marché. Dans les applications mentionnées ci-dessus, le but principal est de mesurer la phase du signal de porteuse $L_2$ pour effectuer une correction tenant compte des phénomènes de propagation dans l'ionosphère.

Des procédés de suivi sans code sont connus en particulier des Brevets des Etats-Unis US 5,134,407 (ASHTECH TELESIS) et US 5,541,606 (TRIMBLE).

Le procédé décrit dans le Brevet US 5,134,407 repose sur le fait que le code Y est en fait la somme modulo 2 du code P connu, à un rythme de 10,23 Mhz, et d'un code d'encryptage, généralement dénommé le code A ou bien le code W, à un rythme nettement inférieur. La forme exacte du code W n'est bien entendu pas connue, mais on sait que son rythme est environ 1/20ème de celui du code P, soit environ 500 KHz.

Les échantillons des signaux $L_1$ et $L_2$ sont corrélés avec des répliques du code P qui sont générées localement. Les générateurs du code P, qui sont soit deux générateurs indépendants, soit un seul générateur et une ligne à retard, sont commandés par un oscillateur à commande numérique NCO, qui est à son tour piloté par un microprocesseur dans le cadre d'une configuration classique d'une boucle à verrouillage de phase, par exemple une boucle de Costas, pour le suivi de porteuse. Le code P local est déplacé temporellement et "aligné" avec le signal d'entrée pour obtenir le maximum d'énergie. Après corrélation avec la réplique de P, le signal est filtré pour réduire le bruit avant que soit effectuée une estimation des bits du code W. Ce filtrage est réalisé de manière classique par intégration et stockage, et la période d'intégration est égale à la durée estimée $T_1$ d'un bit de code W. La présence du code W inconnu a ainsi pour conséquence que la bande passante prédictive ne peut être réduite en dessous du rythme du code W, et que le rapport signal/bruit S/B de la bande de pré-détection est très bas.

Les bruits thermiques sur les signaux $L_1$ et $L_2$ sont statistiquement indépendants. Ceci est utilisé pour décider du signe du bit du code W sur chacune des deux chaînes $L_1$ et $L_2$ et pour appliquer le résultat à l'autre chaîne. Ce procédé de corrélation croisée permet d'utiliser une période d'intégration $T_2$ plus longue que $T_1$, ce qui permet de diminuer le bruit et d'augmenter le rapport signal/bruit de la post-détection. Il est possible de déterminer mathématiquement la probabilité d'une décision erronée effectuée dans la bande passante de pré-détection qui comporte beaucoup de bruit, si l'on connaît le rapport CNR entre la puissance du signal de porteuse du signal transmis et la puissance du bruit pour une bande passante unité. On peut en déduire qu'un certain nombre de décisions sont erronées. Etant donné qu'une décision erronée annule une décision correcte, la technique ne peut fonctionner efficacement que si la probabilité de détection correcte d'un bit du code W est significativement supérieure à 50%.

La présente invention a pour objet un procédé permettant d'augmenter la probabilité de détection correcte.

L'idée de base de l'invention est d'établir un seuil de détection non nul de manière à augmenter la différence entre la probabilité de décision correcte et la probabilité de décision incorrecte.

L'invention concerne ainsi un procédé de traitement des signaux $L_1$ et $L_2$ d'un système de positionnement par satellite, tel que le système GPS, dans lequel chacun desdits signaux $L_1$ et $L_2$ présente une porteuse à fréquence unique modulée par un code pseudo-aléatoire connu P, qui est lui-même modulé par un code inconnu W, dans lequel il est prévu de :

a) corréler dans des chaînes séparées chacun des signaux $L_1$ et $L_2$ avec une réplique générée localement du code P, respectivement dans une première chaîne de traitement affectée au signal $L_1$ et dans une deuxième chaîne de traitement affectée au signal $L_2$, pour produire respectivement un premier et deuxième signal de corrélation,

b) intégrer le premier et le deuxième signal de corrélation sur une période égale à une période estimée d'un bit du code W pour obtenir respectivement un premier et un deuxième signal de bit du code W,

c) corréler de manière croisée le premier et/ou le deuxième signal de bit du code W avec respectivement le deuxième et/ou le premier signal de corrélation, caractérisé par :

entre b et c, tester d'une part si le premier signal de bit du code W est supérieur à une première valeur de seuil positive ou inférieur à une première valeur de seuil négative, et/ou d'autre part si le deuxième signal de bit du code W est supérieur à une deuxième valeur de seuil positive ou inférieur à une deuxième valeur de seuil négative, et ne conserver, pour ladite corrélation croisée, le premier et/ou le deuxième signal de bit du code W que si le test correspondant est satisfait.

Il est particulièrement avantageux, après c, de compter pendant une période donnée le nombre de tests infructueux, de le comparer à une valeur de référence et d'adapter en conséquence au moins une dite valeur de seuil.

Ledit comptage est de préférence réalisé pour chacun desdits tests effectués sur les premiers et deuxièmes signaux de bit du code W, l'adaptation étant alors réalisée sur chacune des dites valeurs de seuil.

L'adaptation est avantageusement réalisée dans une boucle comportant un filtre de boucle du premier ou du deuxième ordre.

Le procédé est en général appliqué aux composantes en phase I et en quadrature Q des signaux $L_1$ et $L_2$.

La corrélation des codes P peut s'effectuer sur le code ponctuel, sur le code anticipé ("early") et/ou sur le code retardé ("late").

D'autres caractéristiques et avantages de l'invention apparaîtront mieux à la lecture de la description qui va suivre, donnée à titre d'exemple non limitatif, en liaison avec les dessins ci-annexés, dans lesquels :

- la figure 1 est un diagramme représentatif du procédé selon le brevet US 5,134,407 précité
- la figure 2 illustre un mode de réalisation préféré de l'invention
- les figures 3a et 3b représentent respectivement les courbes de densité de probabilité, respectivement en absence de seuillage (art antérieur-fig.3a) et en présence d'un seuillage réalisé selon l'invention (fig.3b).

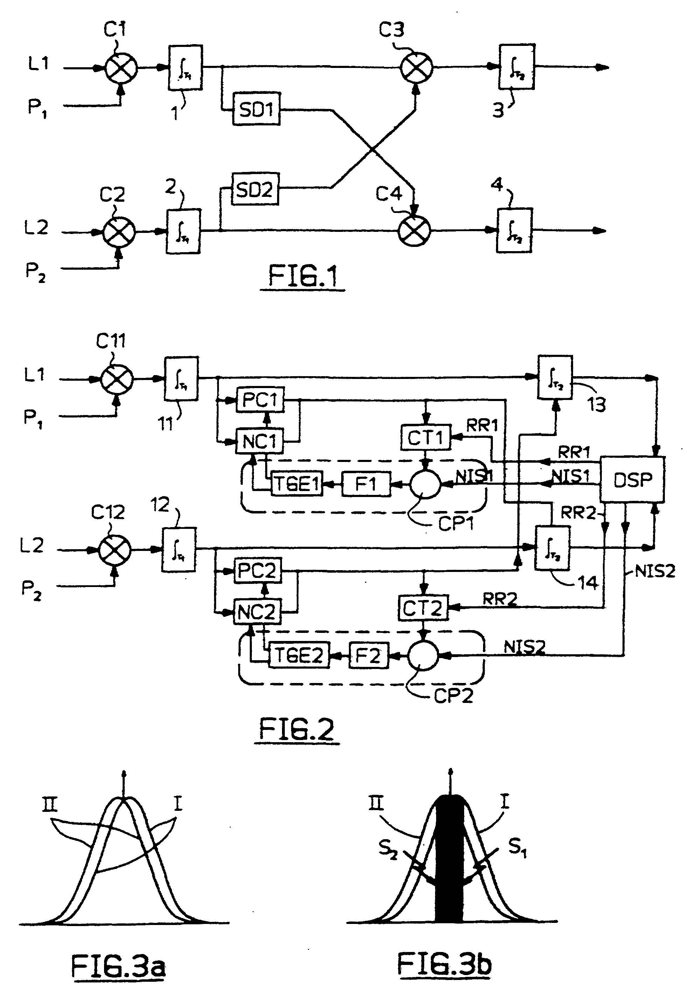

Selon la figure 1, le dispositif selon l'art antérieur comporte deux corrélateurs C1 et C2 qui reçoivent d'une part les échantillons des signaux respectivement $L_1$ et $L_2$ démodulés et d'autre part des répliques P1 et P2 du code P qui sont générées localement. Les signaux présents en sortie des corrélateurs C1 et C2 sont ensuite filtrés par intégration pendant un temps $T_1$ qui est égal à un multiple du cycle du code P et qui correspond à la durée estimée d'un bit du code W. Cette intégration est réalisée par les intégrateurs respectifs 1 et 2. Le signe des signaux intégrés est généré par les détecteurs de signe SD1 et SD2 à partir des signaux intégrés par les intégrateurs respectivement 1 et 2. Une corrélation croisée est mise en oeuvre à partir d'une part d'une corrélation effectuée par un corrélateur C3, du signal de sortie de l'intégrateur 1 et du signal de sortie du détecteur de signe SD2, et/ou d'autre part d'une corrélation effectuée par un corrélateur C4, du signal de sortie de l'intégrateur 2 et du signal de sortie du détecteur de signe SD1, suivie d'une intégration pendant une durée $T_2 > T_1$ réalisée respectivement par les intégrateurs 3 et/ou 4.

L'invention a pour objet un procédé permettant d'améliorer les performances de ladite corrélation croisée.

L'idée de base de l'invention est d'augmenter par seuillage la différence entre la probabilité d'obtenir une décision correcte et celle d'obtenir une décision incorrecte ou erronée.

L'introduction d'un niveau de seuil non nul à partir duquel on décide du signe du bit du code W permet d'augmenter cette différence.

Ce seuil est de préférence adaptatif de manière à assurer un résultat optimal et en particulier à maintenir constante la bande passante de poursuite.

Comme dans la technique précédemment décrite, les signaux $L_1$ et $L_2$ sont corrélés ($C_{11}$-$C_{12}$) avec des codes P générés localement $P_1$ et $P_2$, soit sous la forme de deux codes "alignés" avec le code P du signal entrant qui sont générés soit séparément, soit par génération d'un code ($P_1$ ou $P_2$), puis de l'autre ($P_2$ ou $P_1$) par déphasage, puis intégrés (11,12) pendant une durée $T_1$. Le code W est testé par rapport à des seuils, un positif et un négatif, qui sont de préférence adaptatifs, que le signal, y compris le niveau de bruit qu'il comporte, doit dépasser pour qu'une décision sur le signe du bit du code W soit prise en compte. Les échantillons qui ne satisfont pas au test de seuil sont rejetés. Parmi les décisions prises en compte, il existe une certaine proportion de décisions correctes et une certaine proportion de décisions incorrectes.

La figure 2 illustre le procédé de l'invention, dans le cas des composantes I du signal qui sont en phase et dans le cas du code P ponctuel. En ce qui concerne les composantes Q en quadrature, et les corrélations avec les signaux de code P avancés et retardés, le concept est mis en oeuvre de la même façon.

Alors que le procédé selon l'art antérieur ne met pas en oeuvre de seuil, c'est-à-dire qu'un seuil nul y sert à la détermination du signe du bit du code W, selon l'invention, les signaux en sortie des intégrateurs 11 et 12 sont chacun comparés à un seuil positif et à un seuil négatif. Si le test de seuil est satisfait, c'est-à-dire que par exemple le signal en sortie de l'intégrateur 11 est supérieur au seuil positif ou inférieur au seuil négatif, alors le signe du bit du code W correspondant est pris en compte à l'entrée de l'intégrateur 14 qui réalise une intégration pendant un instant $T_2$ à partir du signal de bit de signe retenu pour le code W et du signal en sortie de l'intégrateur 12. Il en va de même avec le signal à la sortie de l'intégrateur 12 qui, s'il satisfait au test de seuil, voit la valeur de signe corrélée de manière croisée avec le signal en sortie de l'intégrateur 11.

La première branche, affectée au signal $L_1$ comporte à cet effet, en aval de l'intégrateur 11, deux détecteurs de seuil, respectivement positif PC1, et négatif NC1 et le résultat validé de la comparaison est appliqué à une entrée du corrélateur-intégrateur 14. Si une comparaison ne passe pas le test de seuil, le signal à l'entrée de l'intégrateur 14 est ignoré. Un compteur CT1, par exemple à 14 bits, détecte les échantillons ignorés et en accumule le compte de préférence pendant la durée $T_2$. Ce compte est comparé dans un comparateur CP1 avec la valeur désirée NIS1 fournie par un microprocesseur DSP, qui fournit également à des intervalles de $T_2$ un signal RR1 de remise à zéro et de lecture du compteur CT1. Le signal numérique en sortie du comparateur CP1 est appliqué à un filtre de boucle F1, par exemple du premier ordre, puis à un circuit TGE1 qui ajuste la valeur des détecteurs de seuil PC1 et PC2. Si le nombre d'échantillons ignorés est plus élevé que la valeur de consigne, alors la valeur absolue des seuils positif et négatif est augmentée, et vice-versa.

Il en va de même avec la deuxième branche, affectée au signal $L_2$ et dans laquelle les éléments PC2, NC2, CT2, CP2, F2, TGE2, et les signaux RR2 et NIS2 remplissent respectivement les fonctions des éléments PC1, NC1, CT1, CP1, F1, TGE1 et des signaux RR1 et NIS1.

Le même traitement peut s'appliquer aux signaux $L_1$ et $L_2$ en quadrature.

Des branches peuvent être affectées au code P anticipé ("early" ou E) et au code P retardé ("late" ou L), qu'il s'agisse des signaux $L_1$ et $L_2$ en phase I et/ou en quadrature Q. Les traitements sont également similaires.

La deuxième étape d'intégration conditionnelle 13,14 peut être mise en oeuvre à l'aide d'un simple compteur-décompteur, qui fonctionne par exemple de la manière suivante :

- lorsqu'un test de seuil n'est pas satisfait, le compteur-décompteur est désactivé
- lorsque le test de seuil est satisfait pour le seuil positif $S_1$, le compteur est incrémenté, par exemple d'une unité
- lorsque le test de seuil est satifait pour le seuil négatif $S_2$, le compteur est décrémenté, par exemple d'une unité.

La figure 3a représente en ordonnée la probabilité d'erreur en fonction du niveau pour un bit du code W de signe positif (courbe I) et pour un bit du code W de signe négatif (courbe II). La courbe en grisé clair montre la probabilité d'erreur pour l'ensemble des décisions positives et négatives, en l'absence de seuil. La figure 3b représente les mêmes courbes I et II, auxquelles on applique les seuils positifs $S_1$ et négatif $S_2$, ce qui revient à éliminer la zone représentée en grisé foncé, dans laquelle la probabilité d'erreur est la plus élevée.

L'accumulation d'une partie seulement des échantillons résultant de la corrélation avec le code P augmente la bande passante de pré-détection, et par conséquent le niveau de bruit, ce qui fait qu'on peut penser à priori que l'élimination d'échantillons par seuillage est défavorable.

En réalité, la dégradation du rapport signal-bruit est faible étant donné que le rapport signal/bruit qui est déjà peu élevé entraîne un recouvrement comportant des courbes I et II de densité de probabilité pour les codes positifs et négatifs (fig.3a). Si on se reporte à la figure 3b, les zones en gris foncé représentent les décisions rejetées (dans l'exemple représenté, environ 50% de l'ensemble des décisions sur le signe du bit du code W). Les zones non grisées représentent les décisions correctes parmi les décisions conservées, et la partie en grisé clair représente les décisions incorrectes parmi les décisions conservées. Le pourcentage des différentes zones par rapport à la surface totale peut être calculée, et elle est représentée dans le tableau ci-après :

| Seuil (normalisé par le niveau de signal) | $E_1$ = % d'échantillons ignorés | $E_2$ = % déchantillons corrects | $2E_2 - 100$ |
|---|---|---|---|
| 0 (Art Antérieur) | 0 | 58,3 | 16,5 |
| 0,5 | 8,2 | 58,9 | 17,8 |
| 1 | 15,9 | 59,6 | 19,1 |
| 1,5 | 24,2 | 60,3 | 20,6 |
| 2 | 31,5 | 61 | 22 |
| 2,5 | 38,6 | 61,7 | 23,5 |
| 3 | 45,9 | 62,5 | 25,1 |
| 3,5 | 52,2 | 63,3 | 26,5 |
| 4 | 58,1 | 64 | 28 |
| 5 | 68,9 | 65,6 | 31,2 |

Les valeurs du tableau correspondent au cas où CNR = 40 dBHz à la fréquence $L_1$.

E1 représente le pourcentage des échantillons ignorés,

$E_2$ représente, parmi les échantillons conservés, le pourcentage de décisions exactes,

et la dernière colonne représente le pourcentage d'écart ($2E_2$-100) entre les décisions correctes et les décisions incorrectes accumulées, parmi les échantillons conservés.

Comme le montre le tableau ci-dessus, le test de seuil réalisé selon l'invention permet d'augmenter le pourcentage relatif entre les décisions correctes conservées et les décisions qui s'annulent l'une l'autre. L'augmentation de ce pourcentage relatif permet de diminuer la perte de puissance lors de l'intégration. Ce pourcentage est de 16,5% selon l'art antérieur. Il augmente avec le niveau de seuil pour atteindre 31,2% pour le dernier exemple du tableau.

Les seuils peuvent être adaptés à l'aide d'une boucle dont le signal d'erreur est fonction de la différence entre le nombre d'échantillons rejetés (ou conservés) pendant une durée donnée par exemple $T_2$ et une valeur de consigne. Après un filtrage éventuel, un nouveau seuil est calculé. Etant donné que le niveau n'est en général pas le même pour les signaux $L_1$ ou $L_2$, on met en oeuvre quatre registres indépendants pour stocker les seuils pour la branche $L_1$ en phase, pour la branche $L_1$ en quadrature, pour la branche $L_2$ en phase et pour la branche $L_2$ en quadrature. Le seuil aura en général la même valeur pour le code P ponctuel, le code P avancé E, et le code P retardé L. Un seuil positif $S_1$ et le seuil négatif correspondant $S_2$ auront en général la même valeur absolue.

Le filtre de boucle ($F_1$, $F_2$) est en général du premier ordre. Il s'agit par exemple d'un intégrateur. Cependant, le nombre de décisions correctes dépend du rapport signal/bruit, qui peut dans certains cas varier rapidement. Dans des cas extrêmes, il peut s'avérer nécessaire de mettre en oeuvre un filtre du second ordre ou bien d'incorporer au processeur DSP un comparateur qui teste si le pourcentage d'échantillons rejetés est trop élevé et force en conséquence les seuils à la valeur zéro de manière à ré-initialiser la boucle d'adaptation du seuil. En effet, lorsque le rapport signal/bruit se dégrade, le pourcentage d'échantillons rejetés ne peut plus être contrôlé en modififant la valeur du seuil.

Des expériences ont montré qu'une augmentation significative du rapport signal/bruit pouvait être obtenue en supposant que le débit binaire du code W est 1/22 du débit du code P.

Ceci revient à supposer que le code W est cohérent avec l'instant X1A qui intervient tous les 4092 bits de code P, c'est-à-dire qu'il y a 4092/22 = 186 bits du code W par intervalle entre deux instants X1A ce qui est plus plausible que 4092/20 = 204,6 bits du code W que l'on obtient en supposant que la longueur du bit du code W est 20 fois celle du code P.

Selon l'invention, le nombre de bits de code P qui sont accumulés avant une décision est réglable, mais la valeur standard préférée est égale à 22.

La bande passante de pré-détection pour l'intégration sur la longueur d'un bit du code W, soit 22 bits du code P est

$$B = 10,23/22 \text{ Mhz} = 0,465 \text{ Mhz},$$

soit un niveau de bruit Pn = kTB = -146,4dB

La puissance minimale garantie pour le code P du signal $L_1$ est - 163dB, soit un rapport signal/bruit SNR = -163-(-146,4) = -16,6dB.

Pour la puissance minimale garantie du code P du signal $L_1$, la probabilité d'une décision erronée sur le bit de code W est :

$$P_E = \tfrac{1}{2}\,\text{erfc}\,(SNR^{1/2}) = 0,417$$

Selon l'art antérieur, on accumule toutes les décisions correctes ou non sur le bit du code W, et le nombre net de décisions correcte est :

$$P_N = 1 - 2\,P_E = 0,166$$

d'où une dégradation du rapport signal/bruit de D = $20\log_{10}(0,166)$ = -15,6dB

C'est ce que l'on observe avec les techniques de l'art antérieur, mais en choisissant une accumulation sur 22 bits du code P, soit $T_1$ = 2,15µs.

Les deux courbes de densité de probabilité d'accumulation pendant la durée d'un bit du code W ont été représentés aux figures 3a et 3b, et les valeurs de probabilités d'une décision exacte ont été données dans le tableau ci-dessus.

Au fur et à mesure que le seuil augmente, le pourcentage de décisions conservées sur le bit du code W diminue, mais pour les décisions conservées, le pourcentage de décisions correctes augmente. Ceci influe de deux manières sur le rapport signal/bruit. D'une part, le rapport signal/bruit apparent diminue puisque moins de décisions sont accumulées, ce qui réduit l'effet de filtrage du bruit. D'autre part, le rapport signal/bruit augmente en raison de l'accroissement du nombre de décisions correctes.

Bien que le temps d'accumulation $T_2$ reste inchangé lors de la mise en eouvre d'un seuil non nul, le nombre d'accumulation réalisées lors de cette période est plus faible. Etant donné que l'effet de filtrage dépend uniquement de l'accumulation d'un certain nombre d'échantillons, par effet de moyenne pendant le temps d'intégration $T_2$, la bande passante du filtre est augmentée. Il en résulte une diminution de temps d'intégration <u>apparent</u> $T'_2$.

<u>Exemple</u> Dégradation D du Rapport Signal/Bruit

1) Art Antérieur: D = -15,6dB
2) Accumulation de 50% des décisions sur un temps d'intégration $T_2$ de 1ms soit sur un temps d'intégration apparent $T'_2$ de 0,5ms

    D = -11,5dB soit une amélioration de 4,1dB toutes choses égales par ailleurs

3) Accumulation de 25% des décisions

($T_2$ = 1ms, $T'_2$ = 0,25ms)

    D = -9,3dB soit une amélioration de 6,3dB.

Il peut sembler illogique d'éliminer les trois quarts des décisions sur le bit de code W, mais dans une situation normale, la seule raison d'augmenter le temps $T_2$ au delà d'1ms (jusqu'à 20ms qui est la période d'un bit de données GPS) est la réduction de la bande passante du bruit avant le processus de décision. Dans une technique sans code, que ce soit avec un seuil égal à zéro, ou avec un seuil non nul, de préférence adaptatif, comme dans la présente invention, la décision est effectuée après 2,15µs. Des accumulations de 1ms et plus interviennent après la décision et n'ont pour but que de réduire le bruit pour les boucles de suivi situées en aval. Ceci n'influe par contre pas sur le rapport signal/bruit du signal en amont.

L'invention ne s'applique pas seulement au cas du système GPS. Elle s'applique également par exemple au cas du système GLONASS qui utilise les mêmes signaux $L_1$ et $L_2$ que le système GPS.

**Revendications**

**1.** Procédé de traitement des signaux $L_1$ et $L_2$ d'un système de positionnement par satellite, tel que le système GPS, dans lequel chacun desdits signaux $L_1$ et $L_2$ présente une porteuse à fréquence unique modulée par un code pseudo-aléatoire connu P, qui est lui-même modulé par un code inconnu W, dans lequel il est prévu de :

a) corréler dans des chaînes séparées chacun des signaux $L_1$ et $L_2$ avec une réplique générée localement du code P, respectivement dans une première chaîne de traitement affectée au signal $L_1$ et dans une deuxième chaîne de traitement affectée au signal $L_2$, pour produire respectivement un premier et deuxième signal de corrélation.

b) intégrer le premier et le deuxième signal de corrélation sur une période égale à une période estimée ($T_1$) d'un bit du code W pour obtenir respectivement un premier et un deuxième signal de bit du code W.

c) corréler de manière croisée le premier et/ou le deuxième signal de bit de code W avec respectivement le deuxième et/ou le premier signal de corrélation, **caractérisé par**

entre $\underline{b}$ et $\underline{c}$, tester d'une part si le premier signal de bit du code W est supérieur à une première valeur de seuil positive ou inférieur à une première valeur de seuil négative, et/ou d'autre part si le deuxième signal de bit du code W est supérieur à une deuxième valeur de seuil positive ou inférieur à une deuxième valeur de seuil négative, et ne conserver, pour ladite corrélation croisée, le premier et/ou le deuxième signal de bit du code W que si le test respectif est satisfait.

2. Procédé selon la revendication 1 **caractérisé en ce qu'**il est prévu, après $\underline{c}$ de compter pendant une période donnée le nombre de tests infructueux et de le comparer à une valeur de référence et d'adapter en conséquence au moins une dite valeur de seuil.

3. Procédé selon la revendication 2 **caractérisé en ce que** ledit comptage est réalisé pour chacun desdits tests effectués sur chacun desdits premier et deuxième signaux de bits du code W, et **en ce que** l'adaptation est réalisée sur chacune desdites valeurs de seuil.

4. Procédé selon une des revendications 2 ou 3 **caractérisé en ce que** ladite adaptation est réalisée dans une boucle comportant un filtre de boucle (F1,F2) du premier ou du deuxième ordre.

5. Procédé selon une des revendications précédentes **caractérisé en ce qu'**il est appliqué aux composantes en phase et en quadrature des signaux $L_1$ et $L_2$.

6. Procédé selon une des revendications précédentes **caractérisé en ce que** ladite corrélation des codes P s'effectue sur le code ponctuel, sur le code anticipé et/ou sur le code retardé.

7. Procédé selon une des revendications précédentes **caractérisé en ce que** ladite période estimée (T1) d'un bit du code W est égale à 22 fois la durée d'un bit du code P.

## Claims

1. A method of processing the $L_1$ and $L_2$ signals of a satellite positioning system such as the GPS system, in which each of said $L_1$ and $L_2$ signals has a single frequency carrier modulated by a known pseudo-random code P, which is itself modulated by an unknown code W, in which:

a) in separate systems for each of the signals $L_1$ and $L_2$ correlation is performed with a locally-generated replica of the P code, respectively in a first system for processing the signal $L_1$ and in a second system for processing the signal $L_2$, thereby producing respective first and second correlation signals;

b) the first and second correlation signals are integrated over a period equal to an estimated period ($T_1$) for one bit of the W code so as to obtain respective first and second W code bit signals; and

c) the first and/or second W code bit signals are cross-correlated with the second and/or first correlation signals respectively, the method being **characterized by**

between b) and c), testing firstly whether the first W code bit signal is greater than a first positive threshold value or less than a first negative threshold value, and/or secondly whether the second W code bit signal is greater than a second positive threshold value or less than a second negative threshold value, and for said cross-correlation, the first and/or second W code bit signal is retained only if the corresponding test is satisfied.

2. A method according to claim 1, **characterized in that**, after c), the number of unsuccessful tests is counted for a given period and compared with a reference value, and at least one of said threshold values is adapted accordingly.

3. A method according to claim 2, **characterized in that** said counting is performed for each of said tests performed on each of said first and second W code bit signals, and **in that** adaptation is performed on each of said threshold values.

4. A method according to claim 2 or 3, **characterized in that** said adaptation is performed in a loop having a first or second order loop filter ($F_1$, $F_2$).

5. A method according to any preceding claim, **characterized in that** it applies to the in-phase and to the quadrature components of the signals $L_1$ and $L_2$.

6. A method according to any preceding claim, **characterized in that** said correlation of the P codes is performed on the punctual code, on the early code, and/or on the late code.

7. A method according to any preceding claim, **characterized in that** said estimated period ($T_1$) for one bit of the W code is equal to 22 times the duration of one bit of the P code.


**Patentansprüche**

1. Verfahren zum Verarbeiten der Signale $L_1$ und $L_2$ eines Satellitennavigationssystems, wie das GPS-System, in welchem jedes der genannten Signale $L_1$ und $L_2$ eine einzigartige Trägerfrequenz aufweisen, die durch einen bekannten pseudozufälligen Code P moduliert wird, welcher selbst wiederum durch einen unbekannten Code W moduliert ist, in welchem es vorgesehen ist:

   a) in getrennten Ketten jedes der Signale $L_1$ und $L_2$ mit einer lokal generierten Replik des Codes P zu korrelieren, in einer ersten Bearbeitungskette zugeordnet zu dem Signal $L_1$ bzw. in einer zweiten Bearbeitungskette für das Signal $L_2$, um ein erstes beziehungsweise ein zweites Korrelationssignal zu erzeugen;

   b) das erste und das zweite Korrelationssignal über eine Periode zu integrieren, die einer geschätzten Periode ($T_1$) eines Bit des Codes W entspricht, um ein erstes bzw. ein zweites Bit-Signal des Codes W zu erhalten;

   c) so in gekreuzter Weise das erste und/oder das zweite Bit-Signal des Codes W mit jeweils dem zweiten und/oder dem ersten Korrelationssignal zu korrelieren; **gekennzeichnet durch**

   d) zwischen b) und c), einerseits zu testen, ob das erste Bit-Signal des Codes W größer ist als ein erster positiver Schwellenwert oder kleiner als ein erster negativer Schwellenwert, und/oder andererseits, ob das zweite Bit-Signal des Codes W größer ist als ein zweiter positiver Schwellenwert oder kleiner als ein zweiter negativer Schwellenwert und dann für die genannte Kreuzkorrelation das erste und/oder zweite Bit-Signal des Codes W nur dann beizubehalten, wenn der entsprechende Test erfüllt ist.

2. Verfahren nach Anspruch 1, **dadurch gekennzeichnet, dass** es vorgesehen ist, dass nach c) für eine gegebene Periode die Zahl der erfolglosen Tests zu zählen und diese mit einem Referenzwert zu vergleichen und in der Konsequenz wenigstens einen der genannten Schwellenwerte anzupassen.

3. Verfahren nach Anspruch 2, **dadurch gekennzeichnet, dass** das genannte Zählen für jeden der genannten Tests über jedes der genannten ersten und zweiten Bit-Signale des Codes W durchgeführt wird und dass das Anpassen für jeden der genannten Schwellenwerte realisiert ist.

4. Verfahren nach einem der Ansprüche 2 oder 3, **dadurch gekennzeichnet, dass** das genannte Anpassen in einer Schleife realisiert ist, welche einen Schleifenfilter ($F_1$,$F_2$) erster oder zweiter Ordnung enthält.

5. Verfahren nach einem der vorhergehenden Ansprüche, **dadurch gekennzeichnet, dass** das Verfahren angewendet ist auf die Komponenten in Phase und in Quadratur der Signale L1 und L2.

6. Verfahren nach einem der vorhergehenden Ansprüche, **dadurch gekennzeichnet, dass** die genannte Korrelation des Codes P für einen punktuellen Code für einen vorausgesehenen Code und/oder einen nachlaufenden Code erfolgt.

7. Verfahren nach einem der vorhergehenden Ansprüche, **dadurch gekennzeichnet, dass** die genannte geschätzte Periode ($T_1$) eines Bit des Codes W im 22-fachen der Dauer eines Bits des Codes P entspricht.

FIG.1

FIG.2

FIG.3a

FIG.3b